# EUROPÄISCHE PATENTSCHRIFT

(11) **EP 4 314 610 B1**
(45) Veröffentlichungstag und Bekanntmachung des Hinweises auf die Patenterteilung: **04.03.2026**
(21) Anmeldenummer: 22719526.0
(22) Anmeldetag: 29.03.2022
(51) Int. Cl.: F16K 31/06, F16K 31/08

(54) **PROZESSKOMPONENTE**
PROCESS COMPONENT
COMPOSANT DE PROCESSUS

(30) Priorität: 31.03.2021 DE 102021001687
(43) Veröffentlichungstag der Anmeldung: 07.02.2024
(73) Patentinhaber: GEA Tuchenhagen GmbH, 21514 Büchen (DE)
(72) Erfinder: ARNOLD, Wolfgang, 71577 Großerlach (DE)
(74) Vertreter: Hauck Patent- und Rechtsanwälte PartmbB
(86) Internationale Anmeldenummer: PCT/EP2022/058260
(87) Internationale Veröffentlichungsnummer: WO 2022/207637

(56) Entgegenhaltungen:
- EP-A1- 3 497 354
- CN-U- 204 704 396
- DE-A1- 102004 012 245
- JP-A- S5 241 921
- US-A- 2 289 574
- US-A- 2 792 194
- US-A1- 2003 181 788

## Beschreibung

Die Erfindung betrifft eine Prozesskomponente nach dem Oberbegriff des ersten Anspruchs.

Im Stand der Technik sind Prozesskomponenten bekannt, in denen ein Stößel in einem Innenraum der Prozesskomponente mit Magnetkräften bewegt wird. Hierzu ist am Stößel eine erste Magnetanordnung vorgesehen, die magnetisch mit einer zweiten Magnetanordnung gekoppelt ist. Die zweite Magnetanordnung befindet sich am Gehäuse und ist beweglich.

Solch eine Prozesskomponente ist in der CN 204704396 U gezeigt. Dort wird die zweite Magnetanordnung um eine Längsachse der Prozesskomponente gedreht. Dadurch dreht sich ebenfalls die mit ihr gekoppelte erste Magnetanordnung in einem Innenraum der Prozesskomponente. Ein Stößel ist bewegbar auf einem Gewinde angeordnet, durch welches die Drehbewegung in eine axiale Bewegung entlang der Längsachse übersetzt wird.

US 2,289,574 A offenbart ein packungsloses Ventil mit einem ähnlichen Wirkprinzip. Ein Stößel des Ventils weist einen Permanentmagneten auf, der im Wirkungsbereich eines zweiten Permanentmagneten angeordnet ist. Der zweite Permanentmagnet ist auf einer Außenseite eines Gehäuses angeordnet und kann durch einen Bediener gedreht werden, wodurch auch der mit dem ersten Permanentmagneten verbundenen Stößel gedreht wird. Der Stößel weist weiterhin einen Abschnitt mit einem Gewinde auf, das durch ein komplementäres Gewinde aufgenommen ist, das mit dem Gehäuse drehfest verbunden ist. Durch den Eingriff der Gewinde führt eine Drehung des Stößels infolge einer Drehung des zweiten Magneten auch zu einer axialen Verlagerung des Stößels, durch die das Ventil geöffnet oder verschlossen werden kann. JP S52 41921 A zeigt ein ähnliches Ventil.

U 2,792,194 A offenbart ebenfalls ein ähnliches Ventil. Bei diesem Ventil weist der Stößel selber jedoch kein Gewinde und keinen Magneten auf. Stattdessen kann er mit einem zusätzlichen Bestandteil des Ventils, das ein entsprechendes Gewinde und Magneten aufweist, in Kontakt gebracht werden. Der Bestandteil mit Gewinde und der Stößel sind grundsätzlich jedoch grundsätzlich drehbar zueinander. Auf diese Weise soll ermöglicht werden, dass der Stößel besonders stark gegen einen Ventilsitz gepresst werden kann.

Prozesskomponenten werden in Anlagen zur Herstellung von Lebensmitteln, Getränken, Medikamenten und feinchemischen Produkten sowie in der Biotechnologie eingesetzt. Dort sind Rohrleitungsdurchmesser von zehn Zentimetern und mehr in Benutzung. Zugleich sind hohe hygienische und stellenweise aseptische Eigenschaften der Prozesskomponente gefordert, beispielsweise Dichtheit und Reinigbarkeit.

Es war daher Aufgabe der Erfindung, eine Prozesskomponente zu schaffen, die sehr gut reinigbar und in der Größe skalierbar ist.

Diese Aufgabe wird gelöst durch eine Prozesskomponente mit den Merkmalen des ersten Anspruchs. Die abhängigen Ansprüche betreffen vorteilhafte Ausführungen und Weiterbildungen.

Die Prozesskomponente besitzt eine Längsachse und umfasst ein Gehäuse, welches einen Innenraum umgibt und einen ersten Anschluss und einen zweiten Anschluss aufweist, und einen im Innenraum angeordneten Stößel, einer am Stößel angeordneten ersten Magnetanordnung und einer mit der ersten Magnetanordnung magnetisch gekoppelten zweiten Magnetanordnung, welche am Gehäuse um die Längsachse drehbar angeordnet ist. Der Stößel wirkt mit einer im Innenraum vorgesehenen Führung zusammen, unter Verschiebung der ersten Magnetanordnung gegen die zweite Magnetanordnung eine Drehbewegung der zweiten Magnetanordnung in eine axiale Bewegung des Stößels umzusetzen. Die erste Magnetanordnung kann Teil des Stößels oder mit diesem verbunden, vorzugsweise starr verbunden, sein.

Mit dieser Gestaltung wird die starre Kopplung von erster und zweiter Magnetanordnung, wie sie im Stand der Technik gezeigt ist, durch eine flexible Kopplung ersetzt. Zwar sind die Magnetanordnungen zu jeder Zeit miteinander gekoppelt. Doch dabei kommen unterschiedliche Abschnitte einzelner Magnete oder sogar mehrere verschiedene Magnete zum Einsatz, über die die Kopplung wie bei einem Staffellauf weitergeben wird. In den Magnetanordnungen können Dauermagnete verwendet werden, beispielsweise in Stab-, Zylinder- oder Kugelform. Die Magnetisierung der Dauermagnete muss für eine möglichst starke Kopplung der Magnetanordnungen ausgerichtet sein.

Dies erlaubt eine Skalierung der Prozesskomponente auf Abmessungen, wie sie in den eingangs genannten Anwendungen notwendig sind, beispielsweise im Dezimeterbereich. Mit der Skalierbarkeit ist zudem eine hygienische und aseptische Gestaltung erleichtert, da diese nach den geltenden Normen beispielsweise Radien im Bereich mehrerer Millimeter vorsieht und auf Schraubgewinde im Produktbereich zu verzichten ist.

Die Prozesskomponente kann vorteilhaft als Ventil ausgeführt sein, da die Vorteile der vorgenannten Gestaltung dort besonders zur Geltung kommen. In dieser Ausführung ist vorgesehen, dass zwischen erstem Anschluss und zweitem Anschluss eine Fluidverbindung besteht und der Stößel durch passende Gestaltung geeignet ist, diese Fluidverbindung zu unterbrechen. Die notwendigen auf den Stößel wirkenden Kräfte können kostengünstig erzeugt werden, gleichzeitig ist durch die magnetische Kopplung keine mechanische Kopplung des Stößels mit einer außerhalb des Gehäuses angeordneten Verstellvorrichtung notwendig. Entsprechend kann auf eine Dichtung der mechanischen Verbindung zwischen Stößel und Verstellvorrichtung verzichtet werden. Ein hygienischer Schwachpunkt entfällt somit. Dieser Vorteil wird in einem Schaltventil, welches zwischen offen und geschlossen geschaltet wird, genauso erreicht wie in einen Regelventil, in welchem der Stößel beispielsweise eine mit einem zugeordneten Sitz zusammenwirkende Regelkegelkontur aufweist, um den Durchfluss durch das Regelventil graduell anzupassen.

Ein weiterer Vorteil ist, dass in der Prozesskomponente zwischen Stößel und Gehäuse radiale, axiale und halbaxiale Dichtungsanordnungen eingesetzt werden können.

In der erfindungsgemäßen, kostengünstigen, da baulich einfachen, und für hygienische Anwendungen sehr gut geeigneten Ausführung umfasst die Führung zwei kugelausschnittartige Dome. Die Dome wirken als Erhebungen auf einer Innenwand des Gehäuses, zwischen den sich ein Abschnitt der ersten Magnetanordnung befindet. Deren Bewegungsfreiheitsgrade werden in gewünschtem Maße beschränkt.

Die erste Magnetanordnung kann eine Spirale umfassen. Dies erlaubt es, durch die Steigung der Magnetanordnung die Bewegungsgeschwindigkeit des Stößels auf einen für die Anwendung günstigen Wert festzulegen. Außerdem kann notwendige Stärke der magnetischen Kopplung zwischen erster und zweiter Magnetanordnung gestaltet werden. Dabei kann beispielsweise der Einsatz von Magnetmaterial geringgehalten werden, wenn eine Steigung der Spirale flach gewählt wird.

Die Spirale kann mit einer Hohlstange ausgeführt sein, in welcher Dauermagnete aufgenommen sind, beispielsweise Kugelmagnete. Dies verringert die Herstellungskosten, beispielsweise durch Erleichterung der Montage.

Die magnetische Kopplung der Magnetanordnungen wird verbessert, wenn sich gemäß einer Ausführung die zweite Magnetanordnung in Richtung einer Längsachse über eine Höhe einer Spiralwindung der Spirale erstreckt.

Eine andere Ausführung verbessert die Widerstandsfähigkeit von erster Magnetanordnung und Stößel gegen ein Verkippen aus der Längsachse A, indem sich die zweite Magnetanordnung in Richtung einer Längsachse über eine Höhe einer Spiralwindung der Spirale erstreckt.

Eine wiederum andere Ausführung zielt auf die Verbesserung des magnetischen Kopplung zwischen den Magnetanordnungen ab. Es ist vorgesehen, die erste Magnetanordnung wenigstens zwei Kugelmagnete umfasst, zwischen denen eine nichtmagnetische Stahlkugel angeordnet ist und deren Magnetisierung an einer radialen Richtung ausgerichtet ist. Dies führt zu einer engen Ankopplung der Kugelmagnete an die zweite Magnetanordnung. Diese kann mehrere Magnete umfassen, wobei jeder dieser Magnete radial gesehen auf einer Linie mit einem Kugelmagnet anordnebar ist.

Gemäß einer anderen Lösung, die eine Verbesserung der magnetischen Kopplung zwischen den Magnetanordnungen bewirkt, ist vorgesehen, dass die erste Magnetanordnung wenigstens zwei Dauermagnete umfasst, deren Magnetisierung zueinander gegenpolig und an einer radialen Richtung ausgerichtet ist und die mit einem Feldleiter miteinander verbunden sind. Hierdurch entsteht eine hufeisenförmige Magnetanordnung, die an die zweite Magnetanordnung ankoppelt. Es kann ein geschlossener Magnetkreis gebildet werden, wodurch die Kopplung stärker wird.

Auch Veränderungen an der zweiten Magnetanordnung sind geeignet, die magnetische Kopplungen zwischen den Magnetanordnungen zu verbessern. So wurde eine positive Wirkung erreicht, indem die zweite Magnetanordnung wenigstens zwei Magnete umfasst, die so magnetisch gegensinnig zueinander ausgerichtet sind, dass sich magnetischer Nord- und magnetischer Südpol etwa gegenüberstehen.

Die für die Bewegung des Stößels notwendige Bewegung der zweiten Magnetanordnung auf einer Umlaufbahn um die Achse A, im Weiteren auch mit Drehung bezeichnet, wird von einer Magnetverstellung bewirkt, die handbetrieben, hydraulisch, pneumatisch oder elektromotorisch gestaltet sein kann. In einer vorteilhaften Ausführung wird die Bewegung erzeugt, indem die Magnetverstellung eine elektrische Spule umfasst, deren magnetisches Feld in Wirkverbindung mit dem Magnetfeld der zweiten Magnetanordnung bringbar ist. Durch Änderung der Bestromung der Spule ändert sich deren Einfluss auf die zweite Magnetanordnung, worauf diese mit einer mechanischen Bewegung reagiert. Die Auswahl der Anzahl der elektrischen Spulen, deren Verteilung entlang der Umlaufbahn und die Erstreckung über den Umfang des Gehäuses der Prozesskomponente erlauben eine genaue Abstimmung der ausgelösten Bewegung der zweiten Magnetanordnung auf die Notwendigkeiten, die sich aus dem Einsatzgebiet der Prozesskomponente ergeben. Anhand eines Ausführungsbeispiels sollen die Erfindung erläutert und ihre Vorteile vertieft werden. Es zeigen:
- **Fig. 1:**: Schnitt durch eine Prozesskomponente in einer ersten Stellung des Stößels;
- **Fig. 2:**: Schnitt durch die Prozesskomponente in einer zweiten Stellung des Stößels;
- **Fig. 3:**: Schnitt durch eine erste Magnetanordnung, die am Stößel angeordnet ist;
- **Fig. 4:**: Schematische Darstellung der Magnetanordnungen und deren Magnetisierung;
- **Fig. 5:**: Schematische Darstellung der Magnetanordnungen und deren Magnetisierung in einer ersten Weiterbildung;
- **Fig. 6:**: Schematische Darstellung der Magnetanordnungen und deren Magnetisierung in einer zweiten Weiterbildung.

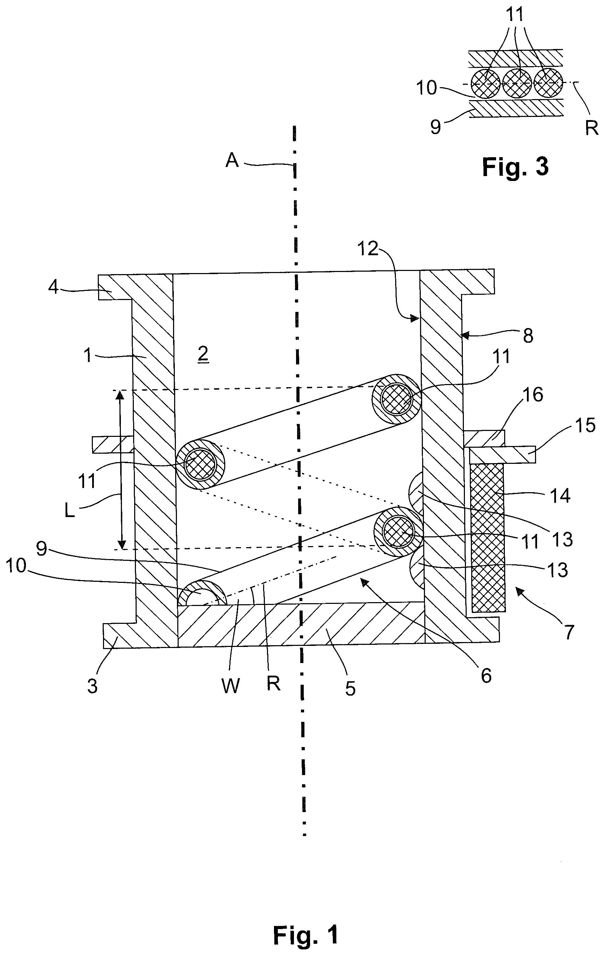

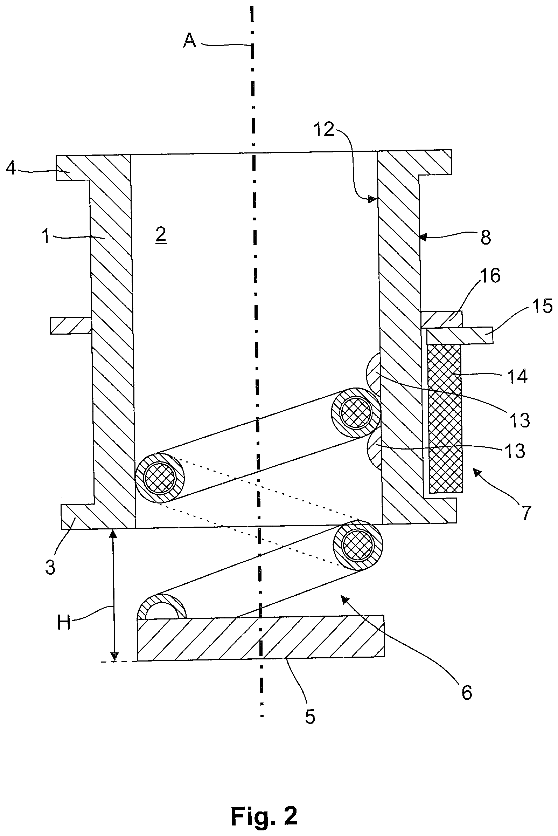

In Fig. 1 und Fig. 2 ist eine Prozesskomponente in einem Schnitt entlang einer Längsachse A durch das Gehäuse 1 gezeigt.

Das Gehäuse 1 weist eine Innenraum 2 auf. Der Innenraum 2 ist über einen ersten Anschluss 3 zugänglich für Fluid. An einem entlang der Längsachse A gegenüberliegenden Ende des Gehäuses 1 ist ein zweiter Anschluss 4 vorgesehen, durch den Fluid in den Innenraum 2 gelangen kann. Die Prozesskomponente ist fluiddurchgängig entlang der Anschlüsse 3 und 4. Einer der Anschlüsse 3 und 4 oder beide Anschlüsse 3 und 4 können in einem Winkel zur Längsachse A angeordnet sein. Sie müssen auch nicht direkt gegenüberliegend angeordnet sein, obwohl dies für die Fluidströmung vorteilhaft ist.

Im Innenraum 2 ist ein Stößel 5 vorgesehen. Im hier gezeigten Beispiel einer als Ventil ausgeführten Prozesskomponente ist der Stößel 5 geeignet gestaltet, die Fluidverbindung zwischen erstem und zweitem Anschluss 3 und 4 zu unterbrechen. Die unterbrochene Fluidverbindung, auch Schließstellung des Ventils genannt, ist in Fig. 1 gezeigt. In Fig. 2 hingegen befindet sich der Stößel 5 in einer Stellung, die einen Fluidfluss zwischen erstem und zweitem Anschluss 3 und 4 erlaubt.

Um die Schließstellung zu erzeugen, sind Gehäuse 1 und Stößel 5 zum dichtenden Zusammenwirken ausgeführt, beispielsweise indem der Stößel 5 mit einem Abschnitt des Gehäuses 1 in dichtenden Kontakt bringbar ist. Dieser dichtende Kontakt kann mit den im Anwendungsgebiet bekannten Dichtungen unterstützt werden. Am Stößel 5 ist dann beispielsweise ein Dichtring vorgesehen. Die Anordnung mit der Dichtung kann radial, axial oder halbaxial ausgeführt sein.

Weitere Anwendungen der Prozesskomponente sind denkbar. Beispielsweise kann der Stößel 5 eine Sprühdüse tragen, die aus dem Innenraum in einen Tank hineingefahren wird, an dem die Prozesskomponente angebracht ist. Durch eine solche Sprühdüse ist eine Reinigungsflüssigkeit in den Tank einbringbar.

Am Stößel 5 ist eine erste Magnetanordnung 6 angeordnet. Diese erstreckt sich in Richtung der Längsachse A über eine Länge L, die für den gewünschten Hub H des Stößels 5 ausreicht. Ausreichend bedeutet, dass in jeder Stellung des Stößels 5 entlang seine Hubes H eine magnetische Kopplung mit einer zweiten Magnetanordnung 7 gegeben ist, die genug Kraft besitzt, um Fluiddruck stand zu halten. Die zweite Magnetanordnung 7 ist auf einer Außenseite 8 des Gehäuses 1 vorgesehen.

Die erste Magnetanordnung 6 besitzt im vorgestellten Beispiel wenigstens abschnittsweise die Form einer Spirale 9, die sich vom Stößel 5 aus in den Innenraum 2 entlang der Längsachse erstreckt. Entlang der Spirale 9 kann ein langer Magnet angeordnet sein. Vorteilhaft besitzt die erste Magnetanordnung 6 eine Mehrzahl von Dauermagneten, die sich in einem Hohlraum der als Rohr ausgeführten Spirale 9 befindet. Das Rohr ist vorzugsweise aus einem nicht-magnetischen Edelstahl gefertigt. Vorzugsweise besitzt es einen runden Querschnitt, da dies hygienischer ist. Die Dauermagneten können als Kugelmagnete 11 ausgeführt sein, was die Fertigung des mit Magneten gefüllten Spiralrohrs vereinfacht. Diese Ausführung ist in Fig. 3 mit einem Schnitt entlang einer Achse R des Rohres veranschaulicht. Ein Winkel W zwischen der Achse des Rohres R und einer Ebene, auf welcher die Längsachse A senkrecht steht, definiert eine Steigung der Spirale 9.

Das Gehäuse 1 besitzt eine dem Innenraum 2 zugewandte Innenseite 12. Auf der Innenseite 12 ist wenigstens eine Führung 13 angeordnet, in welcher die erste Magnetanordnung 6 geführt ist. Die Führung 13 umfasst zwei kugelausschnittartige Dome, zwischen welchen die Spirale 9 gleitend verschiebbar verläuft. Die Führung 13 ist so ausgelegt, dass die Verschiebung nur in einem Winkel zur Längsachse A erfolgen kann. Die Vorteile der genannten Dome sind die gute Reinigbarkeit und geringe Angriffsfläche für Ablagerung. Die Spirale 9 und das Gehäuse 1 sind so dimensioniert, dass sich die Spirale 9 auf der Innenseite 12 gegen ein Verkippen um die Längsachse A abstützt.

Die zweite Magnetanordnung 7 auf der Außenseite 8 des Gehäuses 2 umfasst wenigstens einen Magneten 14. Die zweite Magnetanordnung 7 erstreckt sich über einen Teil eines Umfangs um die Längsachse A. Der Magnet 14 wird von einem Magnethalter 15 getragen. Dieser wird von einer Magnetverstellung 16 drehbar unterstützt. Die Magnetverstellung 16 ist für eine Drehung des Magneten 14 um das Gehäuse 1 und die Längsachse A herum eingerichtet. Diese Drehung wird von einem nicht gezeigten Antrieb bewirkt, der handbetrieben, hydraulisch, pneumatisch oder elektromotorisch gestaltet sein kann. Vorzugsweise, um eine gute magnetische Kopplung von erster und zweiter Magnetanordnung 6 und 7 zu erhalten, erstreckt sich die zweite Magnetanordnung 7, im gezeigten Beispiel der Magnet 14, in Richtung der Längsachse A über eine Höhe einer Spiralwindung der Spirale 9.

Der Schaltvorgang der als Ventil ausgeführten Prozesskomponente dieses Beispiels ist im Vergleich der Fig. 1 mit der Fig. 2 ersichtlich. Der Stößel 5 wird aus der Schließstellung gemäß Fig. 1 in die Offenstellung gemäß Fig. 2 gebracht, indem der Magnet 14 einmal um die Längsachse A rotiert. Durch die magnetische Kopplung mit dem im Hohlraum 10 fest angeordneten Kugelmagneten 11 folgt zunächst der Kugelmagnet 11 dem Magneten 14. Durch die Spiralform der ersten Magnetanordnung 6 im Zusammenwirken mit der Führung 13 erfolgt eine Verschiebung des Kugelmagneten 11 relativ zum Magneten 14 entlang der Längsachse A. Gleichzeitig rotiert die Spirale 9 und damit die erste Magnetanordnung 6 ebenfalls um die Längsachse A. Im weiteren Verlauf der Bahnbewegung des Magneten 14 auf seiner Umdrehung um die Längsachse A wird die Spirale 9 wie eine Schraube gedreht. Die magnetische Kopplung zum Magneten 14 springt von einem Kugelmagneten 11 zu seinem benachbarten Kugelmagneten 11. Eine Umdrehung des Magneten 14 sorgt für eine Umdrehung der Spirale. Durch die Führung 13 führt die Spirale 9 diese Schraubbewegung aus und verschiebt sich um die Ganghöhe der Länge L der Spirale 9. Diese Verschiebung bedeutet die Bewegung des Stößels 5 um den Hub H.

Die Schließbewegung, die den Stößel 5 aus der Stellung gemäß Fig. 2 in die Stellung gemäß Fig. 1 bringt, wird durch eine zur beschriebenen Umkreisung des Magneten 14 um die Längsachse A gegensinnige Umkreisung bewirkt. Der Antrieb und die Magnetverstellung 16 sind entsprechend zur Ausführung dieser Bewegung ausgelegt.

Ein Verkippen der Spirale 9 gegen die Längsachse kann verhindert werden, indem mehr als die Länge L der ersten Magnetanordnung 6 mit der Innenseite 12 in Wirkkontakt bleibt. Im Beispiel der Spirale 9 ist das mehr als Spiralgang.

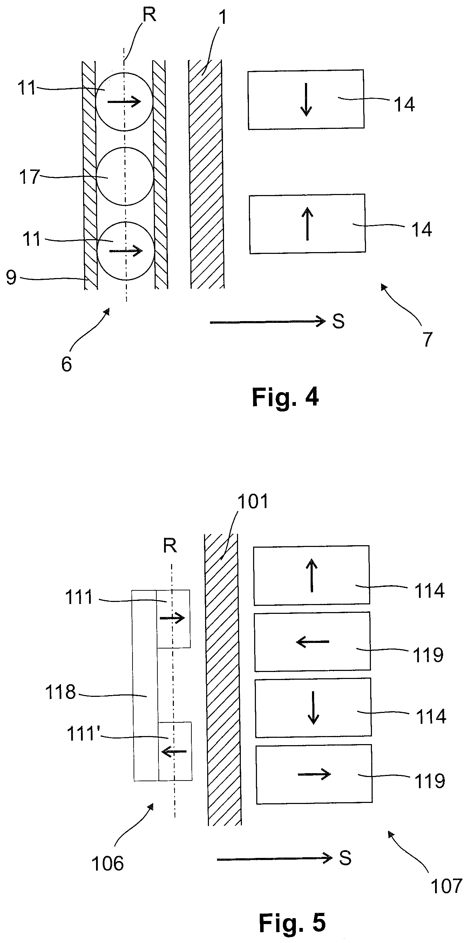

Die Fig. 4 zeigt einen Teil von erster und zweiter Magnetanordnung 6 und 7 in einer schematischen Darstellung.

Die Magnetanordnungen 6 und 7 sind durch das Gehäuse 1 voneinander räumlich getrennt. Über Magnetkräfte stehen sie jedoch in Wirkverbindung miteinander. Die Ausrichtung der Magnetisierung der Dauermagneten der Magnetanordnungen 6 und 7 sind durch Pfeile veranschaulicht. Zur Kraftübertragung müssen die Magnetfelder der Dauermagneten beider Magnetanordnungen 6 und 7 miteinander interagieren. Es zeigt sich, dass eine besonders gute Kraftübertragung über die Felder erreicht wird, wenn die Magnetisierung der Kugelmagnete 11 der ersten Magnetanordnung 6 entlang einer zur Längsachse A senkrechten radialen Richtung S ausgerichtet ist. Währenddessen ist die Magnetisierung der Magnete 14 der zweiten Magnetanordnung 7 an einer zu radialen Richtung S senkrechten Richtung ausgerichtet. Jeweils in einer Umfangsrichtung um die Längsachse L benachbarte Magnete 14 sind derart magnetisch gegensinnig zueinander ausgerichtet, dass sich magnetischer Nord- und magnetischer Südpol etwa gegenüberstehen. Kugelmagnete 11 und Magnete 14 können senkrecht zueinander magnetisiert sein. Weiterhin hat sich eine Verbesserung der magnetischen Kopplung gezeigt, indem zwischen jeweils zwei benachbarten Kugelmagneten 11 ein magnetisch neutrales Abstandselement angeordnet ist, beispielsweise eine nichtmagnetische Stahlkugel 17. Die Erstreckung des einteiligen oder mehrteiligen Abstandselements entlang der Achse R ist so bemessen, dass Kugelmagnete 11 der ersten Magnetanordnung 6 und Magnete 14 der zweiten Magnetanordnung paarweise zugeordnet sind, beispielsweise sich gegenüberstehen und in radialer Richtung S auf einer Linie anordnebar sind. Hierdurch wird eine besonders gute magnetische Kopplung bewirkt.

Eine Weiterbildung der magnetischen Anordnungen 6 und 7 ist in Fig. 5 schematisch dargestellt, in der ebenfalls Pfeile die Ausrichtung der Magnete symbolisiert.

Die Kopplung zwischen den Magnetanordnungen 106 und 107 wird verbessert, indem die Magnetisierungsrichtung wie dargestellt gewählt wird.

Die erste Magnetanordnung 106 besitzt wenigstens zwei Dauermagnete 111, deren Magnetisierung an der radialen Richtung S ausgerichtet ist, jedoch gegensinnig. Während bei einem Dauermagnet 111 der magnetische Südpol radial innen und der magnetische Nordpol radial außen liegt, ist es beim benachbarten Dauermagneten 111' genau umgekehrt. Auf der radial innenliegenden Seite der Dauermagneten 111 und 111' und damit dem Gehäuse 101 abgewandt sind zwei benachbarte Dauermagnete 111 und 111' mit einem magnetisch leitenden Feldleiter 118 miteinander verbunden.

Die zweite Magnetanordnung 107 weist neben den zuvor bei Fig. 4 beschrieben magnetisierten Magneten 114 noch Führungsmagnete 119 auf. Jeweils ein Führungsmagnet 199 ist zwischen zwei Magneten 114 angeordnet. Während die Magnetisierung der Magnete 114 wie zuvor beschrieben gegen die radiale Richtung S geneigt ist, beispielsweise in etwa rechtwinklig zu dieser, ist die Magnetisierung der Führungsmagnete 119 an der radialen Richtung S ausgerichtet. Wie in Fig. 5 dargestellt kann die Magnetisierung von vier benachbarten Magneten 114 und Führungsmagneten 119 um einen rechten Winkel verdreht sein, so dass der fünfte folgende Magnet oder Führungsmagnet wieder die Magnetisierungsrichtung des ersten hat. Im Beispiel dreht sich die Magnetisierung in um eine auf die Papierebene senkrechte Achse und gegen den Uhrzeigersinn, wenn die Folge von Magneten 114 und Führungsmagneten 119 von oben nach unten in der Fig. 5 betrachtet wird.

Auch in dieser Ausführung führt es zu einer verbesserten magnetischen Koppelung zwischen den Magnetanordnungen 6 und 7, wenn jeweils ein Dauermagnet 111, 111' der ersten Magnetanordnung 106 und ein Magnet 114 der zweiten Magnetanordnung 107 auf eine Linie entlang der radialen Richtung S bringbar sind, sich mithin gegenüberstehen. Entsprechend wird der Abstand zwischen benachbarten Dauermagneten 111, 111' und die Erstreckung des Feldleiters entlang der Richtung R gewählt.

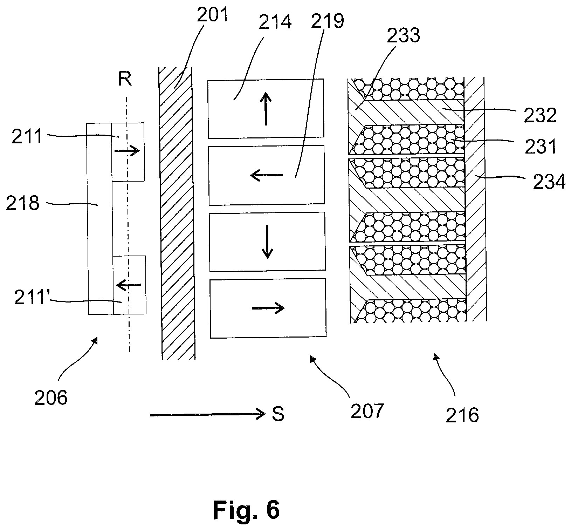

Eine andere Weiterbildung ist schematisch in Fig. 6 dargestellt. Sie betrifft die Magnetverstellung 216, mit der die zweite Magnetanordnung 207 um das Gehäuse 201 herumbewegt wird. In dieser Weiterbildung erfolgt die Bewegung der zweiten Magnetanordnung 207 mit Hilfe einer Spulenanordnung. Die Spulenanordnung umgibt wenigstens abschnittsweise in Umfangrichtung das Gehäuse 201 und eine Bewegungsbahn der zweiten Magnetanordnung 207. Die Spulenanordnung umfasst eine elektrische Spule 231, deren Magnetfeld an der radialen Richtung S ausgerichtet ist, beispielsweise parallel zu ihr. Die elektrische Spule 231 besitzt vorzugsweise zur Feldbündelung einen Spulenkern 232 und einen der zweiten Magnetanordnung 207 zugewandten Pol 233. Ein Joch 234 ist auf einer dem Pol 233 gegenüberliegenden Seite des Spulenkerns 232 angeordnet. Dieses Joch 234 führt das Magnetfeld und schließt einen magnetischen Kreis, der sich zwischen elektrischer Spule 231 und den Magneten 214 und 219 der zweiten Magnetanordnung 207 ausbildet. Durch Anordnen mehrere elektrischer Spulen 231 entlang der Bewegungsbahn der zweiten Magnetanordnung 207 und Wechseln der Bestromung koppelt die zweite Magnetanordnung 207 an wechselnde Spulen 231 an und wird somit mitgeführt und mechanisch bewegt.

Die zweite Magnetanordnung 207 kann, wie im Beispiel nach Fig. 5, Magnete 214 und Führungsmagnete 219 aufweisen. Die erste Magnetanordnung kann nach einem der gezeigten Ausführungsbeispiele nach Fig. 1 bis Fig. 5 ausgeführt sein und gegensinnig gepolte Dauermagnete 211 und 211' sowie Feldleiter 218 aufweisen.

### Bezugszeichenliste

- 1; 101; 201: Gehäuse
- 2: Innenraum
- 3: erster Anschluss
- 4: zweiter Anschluss
- 5: Stößel
- 6; 106; 206: erste Magnetanordnung
- 7; 107; 207: zweite Magnetanordnung
- 8: Außenseite
- 9: Spirale
- 10: Hohlraum
- 11: Kugelmagnet
- 12: Innenseite
- 13: Führung
- 14; 114; 214: Magnet
- 15: Magnethalter
- 16; 216: Magnetverstellung
- 17: Stahlkugel
- 111; 111'; 211; 211': Dauermagnet
- 118; 218: Feldleiter
- 119; 219: Führungsmagnete
- 231: elektrische Spule
- 232: Spulenkern
- 233: Pol
- 234: Joch

- A: Längsachse
- H: Hub
- L: Länge
- W: Winkel
- R: Achse des Rohrs
- S: Radiale Richtung

## Patentansprüche

1. Prozesskomponente mit einer Längsachse (A) und einem Gehäuse (1), welches einen Innenraum (2) umgibt und einen ersten Anschluss (3) und einen zweiten Anschluss (4) aufweist, und mit einem im Innenraum (2) angeordneten Stößel (5), einer am Stößel angeordneten ersten Magnetanordnung (6; 106; 206) und einer mit der ersten Magnetanordnung magnetisch gekoppelten zweiten Magnetanordnung (7; 107; 207), welche am Gehäuse (1) um die Längsachse drehbar angeordnet ist, wobei der Stößel (5) mit einer im Innenraum (2) vorgesehenen Führung (13) zusammenwirkt, unter Verschiebung der ersten Magnetanordnung (6; 106; 206) gegen die zweite Magnetanordnung (7; 107; 207) eine Drehbewegung der zweiten Magnetanordnung (7; 107; 207) in eine axiale Bewegung (H) des Stößels (5) umzusetzen, **dadurch gekennzeichnet, dass** die Führung (13) zwei kugelausschnittartige Dome umfasst.

2. Prozesskomponente nach Anspruch 1, **dadurch gekennzeichnet, dass** zwischen erstem Anschluss (3) und zweitem Anschluss (4) eine Fluidverbindung besteht und der Stößel (5) geeignet gestaltet ist, diese Fluidverbindung zu unterbrechen.

3. Prozesskomponente nach einem der vorhergehenden Ansprüche, **dadurch gekennzeichnet, dass** die erste Magnetanordnung (6; 106; 206) eine Spirale (9) mit wenigstens einem Dauermagneten (11; 111; 111'; 211; 211') umfasst.

4. Prozesskomponente nach Anspruch 3, **dadurch gekennzeichnet, dass** sich die zweite Magnetanordnung (7; 107; 207) in Richtung einer Längsachse (A) über eine Höhe einer Spiralwindung der Spirale (9) erstreckt.

5. Prozesskomponente nach Anspruch 3 oder 4, **dadurch gekennzeichnet, dass** in jeder Stellung des Stößels mehr als die Länge (L) einer Ganghöhe der Spirale (9) mit einer Innenseite (12) des Gehäuses (1) in Wirkkontakt steht.

6. Prozesskomponente nach einem der vorhergehenden Ansprüche, **dadurch gekennzeichnet, dass** die erste Magnetanordnung (6) wenigstens zwei Kugelmagnete (11) umfasst, zwischen denen eine nichtmagnetische Stahlkugel angeordnet ist und deren Magnetisierung an einer radialen Richtung (S) ausgerichtet ist.

7. Prozesskomponente nach einem der vorhergehenden Ansprüche, **dadurch gekennzeichnet, dass** die erste Magnetanordnung (206) wenigstens zwei Dauermagnete (211, 211') umfasst, deren Magnetisierung zueinander gegenpolig und an der radialen Richtung (S) ausgerichtet ist und die mit einem Feldleiter (218) miteinander verbunden sind.

8. Prozesskomponente nach einem der vorhergehenden Ansprüche, **dadurch gekennzeichnet, dass** die zweite Magnetanordnung (207) wenigstens zwei Magnete (14, 114, 214) umfasst, die so magnetisch gegensinnig zueinander ausgerichtet sind, dass sich magnetischer Nord- und magnetischer Südpol etwa gegenüberstehen.

9. Prozesskomponente nach einem der vorhergehenden Ansprüche, **dadurch gekennzeichnet, dass** die Magnetverstellung (216) eine elektrische Spule (231) umfasst, deren magnetisches Feld in Wirkverbindung mit dem Magnetfeld der zweiten Magnetanordnung (7; 107; 207) bringbar ist.

## Claims

1. Process component having a longitudinal axis (A) and a housing (1) which surrounds an interior (2) and has a first connection (3) and a second connection (4), and having a plunger (5) arranged in the interior (2), a first magnet arrangement (6; 106; 206) arranged on the plunger, and a second magnet arrangement (7; 107; 207) magnetically coupled to the first magnet arrangement, which second magnet arrangement (7; 107; 207) is arranged on the housing (1) so as to be rotatable about the longitudinal axis, wherein the plunger (5) cooperates with a guide (13) provided in the interior (2) to convert a rotational movement of the second magnet arrangement (7; 107; 207) into an axial movement (H) of the plunger (5) by displacing the first magnet arrangement (6; 106; 206) against the second magnet arrangement (7; 107; 207), **characterized in that** the guide (13) comprises two sphere-segment-shaped domes.

2. Process component according to claim 1, **characterized in that** there is a fluid connection between the first connection (3) and the second connection (4) and the plunger (5) is designed to interrupt this fluid connection.

3. Process component according to one of the preceding claims, **characterized in that** the first magnet arrangement (6; 106; 206) comprises a spiral (9) with at least one permanent magnet (11; 111; 111°; 211; 211°).

4. Process component according to claim 3, **characterized in that** the second magnet arrangement (7; 107; 207) extends in the direction of a longitudinal axis (A) over a height of a spiral turn of the spiral (9).

5. Process component according to claim 3 or 4, **characterized in that**, in each position of the plunger, more than the length (L) of a pitch of the spiral (9) is in operative engagement with an inner side (12) of the housing (1).

6. Process component according to one of the preceding claims, **characterized in that** the first magnet arrangement (6) comprises at least two ball magnets (11), between which a non-magnetic steel ball is arranged and whose magnetization is aligned with a radial direction (S).

7. Process component according to one of the preceding claims, **characterized in that** the first magnet arrangement (206) comprises at least two permanent magnets (211, 211°) whose magnetization is of opposite polarity to one another and aligned with the radial direction (S) and which are connected to one another by a flux guide (218).

8. Process component according to one of the preceding claims, **characterized in that** the second magnet arrangement (207) comprises at least two magnets (14, 114, 214) which are magnetically oppositely oriented with respect to one another in such a way that the magnetic north pole and magnetic south pole are approximately opposite one another.

9. Process component according to one of the preceding claims, **characterized in that** the magnetic actuator (216) comprises an electric coil (231), the magnetic field of which can be brought into functional connection with the magnetic field of the second magnet arrangement (7; 107; 207).

## Revendications

1. Composant de processus doté d'un axe longitudinal (A) et d'un boîtier (1), lequel entoure un espace intérieur (2) et présente un premier raccord (3) et un deuxième raccord (4), et doté d'un poussoir (5) disposé dans l'espace intérieur (2), d'un premier ensemble d'aimants (6 ; 106 ; 206) disposé sur le poussoir et d'un deuxième ensemble d'aimants (7 ; 107 ; 207) accouplé magnétiquement au premier ensemble d'aimants, lequel est disposé sur le boîtier (1) de façon rotative autour de l'axe longitudinal, dans lequel le poussoir (5) coopère avec un guidage (13) prévu dans l'espace intérieur (2), pour convertir un mouvement de rotation du deuxième ensemble d'aimants (7 ; 107 ; 207) en un mouvement axial (H) du poussoir (5) par déplacement du premier ensemble d'aimants (6 ; 106 ; 206) contre le deuxième ensemble d'aimants (7 ; 107 ; 207), **caractérisé en ce que** le guidage (13) comporte deux dômes semblables à des sections sphériques.

2. Composant de processus selon la revendication 1, **caractérisé en ce qu'**une liaison fluidique est présente entre le premier raccord (3) et le deuxième raccord (4) et le poussoir (5) est conçu de façon appropriée pour interrompre cette liaison fluidique.

3. Composant de processus selon l'une des revendications précédentes, **caractérisé en ce que** le premier ensemble d'aimants (6 ; 106 ; 206) comporte une spirale (9) dotée d'au moins un aimant permanent (11 ; 111 ; 111' ; 211 ; 211').

4. Composant de processus selon la revendication 3, **caractérisé en ce que** le deuxième ensemble d'aimants (7 ; 107 ; 207) s'étend en direction d'un axe longitudinal (A) au-delà d'une hauteur d'un tour de spirale de la spirale (9).

5. Composant de processus selon la revendication 3 ou 4, **caractérisé en ce que** dans chaque position du poussoir, plus de la longueur (L) d'une hauteur de pas de la spirale (9) est en contact actif avec un côté intérieur (12) du boîtier (1).

6. Composant de processus selon l'une des revendications précédentes, **caractérisé en ce que** le premier ensemble d'aimants (6) comporte au moins deux aimants sphériques (11), entre lesquels est disposée une bille d'acier non magnétique et dont la magnétisation est orientée sur une direction radiale (S).

7. Composant de processus selon l'une des revendications précédentes, **caractérisé en ce que** le premier ensemble d'aimants (206) comporte au moins deux aimants permanents (211, 211'), dont la magnétisation présente des polarités inversées l'un par rapport à l'autre et est orientée sur la direction radiale (S) et lesquels sont reliés entre eux à l'aide d'un conducteur de champ (218).

8. Composant de processus selon l'une des revendications précédentes, **caractérisé en ce que** le deuxième ensemble d'aimants (207) comporte au moins deux aimants (14, 114, 214), lesquels sont orientés magnétiquement dans des sens opposés l'un par rapport à l'autre, de telle façon que le pôle Nord magnétique et le pôle Sud magnétique se trouvent approximativement l'un en face de l'autre.

9. Composant de processus selon l'une des revendications précédentes, **caractérisé en ce que** le réglage d'aimant (216) comporte une bobine électrique (231) dont le champ magnétique peut être amené en liaison active avec le champ magnétique du deuxième ensemble d'aimants (7 ; 107 ; 207).
